# EUROPÄISCHE PATENTSCHRIFT

(11) **EP 0 776 308 B1**
(45) Veröffentlichungstag und Bekanntmachung des Hinweises auf die Patenterteilung: **02.11.2000**
(21) Anmeldenummer: 96915906.0
(22) Anmeldetag: 14.06.1996
(51) Int. Cl.: B65G 1/137

(54) **VERFAHREN UND EINRICHTUNG ZUM KOMMISSIONIEREN**
METHOD AND DEVICE FOR PREPARING GOODS ORDERS
PROCEDE ET DISPOSITIF DE PREPARATION DES COMMANDES

(30) Priorität: 16.06.1995 AT 32895 U
(43) Veröffentlichungstag der Anmeldung: 04.06.1997
(73) Patentinhaber: TGW-TRANSPORTGERÄTE GMBH, A-4600 Wels (AT)
(72) Erfinder: KÖNIG, Heinz, A-4600 Wels (AT); VON HACHT, Werner, D-91080 Uttenreuth (DE); GABLER, Wolfgang, A-4654 Bad Wimsbach-Neydharting (AT)
(74) Vertreter: Kliment, Peter, Dipl.-Ing.
(86) Internationale Anmeldenummer: AT9600108
(87) Internationale Veröffentlichungsnummer: WO9700218

(56) Entgegenhaltungen:
- EP-A- 0 645 322
- CH-A- 666 668
- DE-A- 3 731 735
- DE-A- 19 501 883
- FR-A- 2 645 992

## Beschreibung

Die Erfindung bezieht sich auf ein Verfahren zum Kommissionieren (order picking) gemäß dem Oberbegriff des Anspruches 1.

Ein solches Verfahren wird besonders für die Belieferung von Geschäften, z.B. Lebensmittelgeschäften, oder von Filialen einer Handelskette, insbesondere Supermarkt-Kette, von einem Großhändler oder einem Großlager einer Handelskette aus verwendet.

Dabei ist unter dem Begriff "Kommissionieren" das Zusammenstellen von verschiedenen Artikeln gemäß einem Auftrag eines Auftraggebers zu verstehen.

Der Begriff "Verteileinheit" (store keeping unit) bedeutet dabei eine bestimmte Anzahl, die auch lediglich ein Stück betragen kann, gleicher Artikel, wobei diese Anzahl von gleichen Artikeln miteinander verbunden sind und die Mindestabgabemenge für einen Auftrag darstellt. Diese Verbindung der eine Verteileinheit bildende Anzahl gleicher Artikel kann durch eine gemeinsame Kunststoffummantelung erfolgen oder auch durch Ankleben der einzelnen Artikel an einem relativ dünnen und nur eine geringe Festigkeit aufweisenden Träger, z.B. ein Stück Karton, erreicht werden.

Unter "Artikel" ist dabei ein bestimmtes Produkt in einer bestimmten Verpackungsgröße zu verstehen. Mit anderen Worten, ein Produkt "A" in einer Packungsgröße "B" stellt einen anderen Artikel dar, als das Produkt "A" in einer Packungsgröße "C" oder ein Produkt "D" in der Packungsgröße "B".

Der Begriff "artikelrein" bedeutet daher, daß die betreffende Einheit, z.B. die Großeinheit, aus einer Vielzahl lediglich eines Artikels zusammengestellt ist.

Unter dem Begriff "Großeinheit" wird eine Vielzahl gleicher miteinander verbundener Verteileinheiten verstanden, die zu einer Einheit zusammengefaßt sind und gemeinsam als Einheit, meist auf einer Palette angeliefert werden.

Bei bekannten derartigen Verfahren werden die einzelnen Verteileinheiten zu feststehenden Regalen eines Lagers transportiert und in dieses eingelagert und aus diesem zur Zusammenstellung der einzelnen Kommissionen, bzw. Aufträge, entnommen. Dies erfolgt nach manchen Verfahren händisch, wobei die entnommenen Waren auf ein Transportband gelegt werden, das mit die Waren seitlich zu Packstationen abschiebenden Abschiebeeinrichtungen versehen ist.

Weiters wurden auch schon Verfahren bekannt, bei denen die Waren von Ausgabeeinrichtungen, die von einem Rechner gesteuert sind, auf eine Transporteinrichtung ausgegeben werden. Diese Transporteinrichtung bewegt sich mit konstanter Geschwindigkeit an den Ausgabeeinrichtungen vorbei. Dabei ist jedem Auftrag ein bestimmter Bereich der Transporteinrichtung zugeordnet, der sich mitbewegt. Mit den für einen Auftrag bereitgestellten losen Artikelhaufen oder Haufen von Verteileinheiten werden Behälter gefüllt, die sich auf einem Transportband befinden, das zu Packstationen führt. Dort werden die Behälter vom Transportband genommen und für eine Auslieferung verpackt.

Bei diesen Verfahren ergibt sich jedoch der Nachteil, daß die Waren häufig von einem Transportmittel auf ein anderes transferiert werden müssen. Dadurch kann es zu Beschädigungen der Verpackung kommen, da die Verteileinheiten lose und ungeschützt transportiert und gehandhabt werden müssen. Dies umso mehr, als zur Vermeidung unnötigen Mülls der Verpackungsaufwand möglichst reduziert wird. Dabei stellen allenfalls beschädigte Verpackungen der Waren ein sehr gravierendes Problem im Hinblick auf einen reibungslosen Ablauf des Warenflusses dar. Außerdem ist es bei diesem Verfahren erforderlich die Kommissionierung zu einem Zeitpunkt vorzunehmen, zu dem die manuellen Packstationen besetzt sind. Auch der apparative Aufwand bei der Durchführung dieses Verfahrens stellt im Hinblick auf den Platzbedarf ein erhebliches Problem dar, wobei insbesondere der Sorter von Bedeutung ist.

Ziel der Erfindung ist es, ein Verfahren der eingangs erwähnten Art vorzuschlagen, bei dem eine sehr weitgehende Schonung der Waren gewährleistet ist und bei dem eine weitgehend vollautomatische Kommissionierung möglich ist.

Erfindungsgemäß wird dies bei einem Verfahren der eingangs erwähnten Art durch die kennzeichnenden Merkmale des Anspruches 1 erreicht.

Durch die vorgeschlagenen Maßnahmen ist sichergestellt, daß die Verteileinheiten der Waren selbst lediglich bei der Zerteilung der Großeinheiten, bzw. beim Beladen der Warenträger und beim Abnehmen von Warenträgern, bzw. beim Beladen der Transportbehälter gefaßt zu werden brauchen. Dadurch ist eine sehr weitgehende Schonung der Waren, bzw. deren Verpackung gewährleistet, da eben beim Zusammenstellen der Kommissionen nicht die Waren selbst, sondern lediglich die diese tragenden Warenträger gehandhabt werden müssen.

Die Waren können aber auch samt den Warenträgern und mit diesen verbunden angeliefert werden. In einem solchen Fall ergibt sich eine besonders weitgehende Schonung der Verpackung der Waren, da eine durchgehende Handhabung mittels der Warenträger, d.h. einschließlich der Manipulationen beim Zerlegen der Großeinheiten und des Packens der Transportbehälter, möglich ist. Dabei ist es zweckmäßig, wenn die mit den Waren angelieferten Warenträger in Ihren Maßen den Aufnahmemaßen der Lagerbehälter und Kommissionsbehälter entsprechen, da in einem solchen Fall auf separate Warenträger verzichtet werden kann und die Mehrweggebinde den Warenträgern entsprechen. Dabei sind unter "Mehrweggebinden" Behälter zu verstehen die befüllt ausgeliefert werden und leer zu einer Wiederbefüllung durch den Erzeuger der betreffenden Ware zurückgenommen werden.

In einem solchen Fall müssen die einzelnen auf Warenträgern angelieferten Verteileinheiten mit einem entsprechenden Code versehen und die entsprechenden Daten in den Rechner eingegeben werden, wobei jeder solcher Warenträger einen separaten Code erhalten muß, wie dies auch bei den zur einzelweisen Aufnahme der Verteileinheiten vorgesehenen Warenträgern der Fall ist.

Die Warenträger können dabei durch Tabletts, Kisten od.dgl. gebildet sein. Wesentlich ist dabei nur, daß deren Maße den Aufnahmen der Lager- und Kommissionsbehälter entsprechen und eine ausreichende Stabilität aufweisen.

Durch die vorgeschlagenen Maßnahmen ergibt sich auch der Vorteil, daß alle Waren einer Kommission einer von mehreren Packstationen zugeleitet werden können und auf die Anordnung eines Sorters, der sehr viel Platz beansprucht, verzichtet werden kann. Bisher hat meist ein Sorter die Verteileinheiten einer Kommission mehreren nebeneinander angeordneten Packstationen zugeleitet, die meist von einer Person gemeinsam bedient wurden.

Die vorgeschlagenen Maßnahmen ermöglichen es außerdem, eine für die Vermeidung von Transportschäden optimale Packordnung festzulegen. Dies ist bei den bekannten Verfahren, bei denen die Kommissionen in mehreren Artikelhaufen oder Haufen von Verteileinheiten auf einer Fördereinrichtung mit zusammengestellt und mittels Abschiebeeinrichtungen seitlich zu Packstationen abgeschoben werden, nicht möglich, da durch das seitliche Abschieben der Haufen innerhalb dieser Haufen keine Ordnung eingehalten werden kann. Auch bei der nach einem bekannten Verfahren vorgesehenen Befüllung von Behältern mit einem je einem Auftrag zugeordneten losen Artikelhaufen oder Haufen von Verteileinheiten ist die Einhaltung einer Packordnung nicht möglich. Eine bestimmte Packordnung kann bei den bekannten Verfahren nur direkt im Bereich der Packstation beim manuellen Befüllen der Transportbehälter nach dem Eintreffen aller einer Kommission zugehörigen Verteileinheiten erfolgen.

Da in der Regel für das Befüllen der Transportbehälter, insbesondere zu Zeiten eines erhöhten Arbeitsanfalles, nur sehr wenig Zeit zur Verfügung steht, kommt es dabei zu zahlreichen Abweichungen von der Packordnung. Dies führt zu einer erheblichen Zahl von Transportschäden.

Durch die DE 37 31 735 A wurde ein Verfahren zur Nachbeschickung von Vitrinen eines Verkaufsraumes bekannt. Bei diesem Verfahren werden die Großeinheiten zu Arbeitstischen gebracht, zu denen auch Lagerbehälter aus einer Bereitschaftszone gebracht werden. Die Großeinheiten werden zerlegt und die Warenträger mit den den Großeinheiten entnommenen Artikeln befüllt, wobei die Warenträger eine an sich unbestimmte Zahl von Artikel entsprechend ihrer Aufnahmekapazität aufnehmen. Eine Verbindung einer bestimmten Anzahl von gleichen Artikeln zu Verteileinheiten erfolgt dabei nicht.

Die befüllten Warenträger werden in die Lagerbehälter eingeschoben und danach die befüllten Lagerbehälter zu einer Entnahme- und Packstation gebracht, die gleichzeitig als Zwischenlager dient.

In dieser Packstation werden die Warenträger samt den darauf befindlichen losen Artikel aus den Lagerbehältern entnommen und in Warennachliefer-Wagen eingeschoben und mit diesem in den Verkaufsraum geschoben. Sollten beim Nachfüllen der Vitrinen einzelne Artikel auf den Warenträgern in den Warennachliefer-Wagen verbleiben, so werden die Warennachliefer-Wagen samt den darauf verbliebenen Artikeln zur Packstation zurückgebracht. Die leeren Warennachliefer-Wagen werden in eine Bereitstellungszone gebracht.

Bei diesem bekannten Verfahren handelt es sich jedoch nicht um ein Kommissionierverfahren, sondern um ein Verfahren zur Auffüllung von Vitrinen in einem Verkaufsraum, bei dem jedoch keine Zuordnung zu bestimmten Aufträgen und auch keine Zusammenfassung von gleichen Artikel zu Verteileinheiten erfolgt. Es erfolgt auch keine mengenmäßige Zuordnung der einzelnen Artikel zu einem bestimmten Warenträger, und es erfolgt auch keine Codierung der Warenträger und keine Zuordnung der einzelnen Warenträger zu einem bestimmten Artikel.

Durch die Merkmale des Anspruches 2 können die entnommenen Verteileinheiten in der Reihenfolge ihrer Entnahme, die nach einer vorgegebenen Packordnung erfolgt, auf einfache Weise den Packstationen zugeführt werden. Dadurch kann für eine entsprechende Einhaltung der vorgesehenen Packordnung gesorgt werden, wobei für die Zufuhr der Verteileinheiten einfache Förderbänder od. dgl. verwendet werden können.

Durch die Merkmale des Anspruches 3 ergibt sich der Vorteil, daß Kommissionen vorbereitet und zwischengelagert werden können und danach laufend zu einer Packstation gebracht werden können, so daß bei dieser keine Stehzeiten anfallen. Außerdem ist es auch möglich auch unvollständige Kommissionen vorzubereiten und nach Erhalt der letzten Auftragspositionen der betreffenden Kommission diese fertigzustellen. Anders ausgedrückt, ist es durch die vorgeschlagenen Maßnahmen möglich, z.B. eine Kommission einer bestimmten Filiale oder eines bestimmten Geschäftes nach deren Zusammenstellung durch einen nachträglichen Ergänzungsauftrag dieser Filiale oder diesen Geschäftes noch zu ergänzen.

Dadurch können die bisher üblichen Spitzenbelastungen beim Kommissionieren knapp vor Beginn der Auslieferungen der Waren vermieden werden. Dies ist besonders bei Verteil-Lagern von Lebensmittel-Filialketten von Bedeutung, deren Registrierkassen mit dem Rechner des Lagers verbunden sind. Der Rechner kann bei Verkauf einer Menge eines Artikels in einer bestimmten Filiale, welche Menge einer Verteileinheit entspricht, die Kommissionierung einer solchen Verteileinheit für die betreffende Filiale starten.

Ein weiteres Ziel der Erfindung ist es, eine Einrichtung zur Durchführung des erfindungsgemäßen Verfahrens vorzuschlagen. Ausgehend von einer Einrichtung gemäß dem Oberbegriff des Anspruches 4 wird zur Sicherung einer möglichst weitgehenden Schonung der Waren und Sicherstellung einer optimalen Führung des erfindungsgemäßen Verfahrens die kennzeichnenden Merkmale des Anspruches 4 vorgeschlagen.

Durch die vorgeschlagenen Maßnahmen ist eine sehr weitgehende Schonung der Waren und deren Verpackung sichergestellt, da die Waren innerhalb des Lagers nur über die Warenträger gehandhabt werden und daher nicht die Waren selbst sondern nur diese tragenden Warenträger umgeschichtet und umgereiht werden, wobei dies auch nur über relativ kurze Wegstrecken erfolgt. Umgruppierungen über größere Entfernungen können in der Weise erfolgen, daß die Lager- oder Kommissionsbehälter samt den eingeschobenen Warenträgern bewegt werden. Außerdem ist durch die transportablen Lager- und Kommissionsbehälter auch die Möglichkeit gegeben, die Wege sehr kurz zu halten, da es für die Zubringung der Waren und den Abtransport der Waren keine bisher übliche feststehende Regale umfahren werden müssen. Weiters ist durch diese Maßnahmen auch ein Höchstmaß an Flexibilität bei der Aufteilung des Lagerraumes auf Vorratslager für die zu kommissionierenden Waren und Lagerraum für die Bereitstellung der in den Kommissionsbehältern befindlichen kommissionierten Waren gegeben. Dadurch kann der gesamte Lagerraum relativ klein gehalten werden, da keiner dieser Bereiche auf eine für den jeweiligen Warenumschlag erforderlichen Maximalgröße ausgelegt werden muß.

Dabei ist auch sichergestellt, daß die einzelnen Warenträger sicher vom Rechner über die Leseeinrichtung erfaßt werden und eine entsprechende Verknüpfung der im Rechner eingeschriebenen Daten der einzelnen Artikel bzw. Verteileinheiten durch Eingabe der warenspezifischen Kennung verknüpft werden. Dadurch ist auch eine entsprechende Festlegung der Packordnung möglich, wobei diese Festlegung erst nach der Fertigstellung einer Kommission, bzw. erst unmittelbar vor der Entnahme der Warenträger bei der Entnahmestation erfolgt.

Durch die Merkmale des Anspruches 5 können die in die Lagerbehälter eingeschobenen Warenträger sehr leicht entnommen und in Aufnahmen der Kommissionsbehälter eingeschoben werden.

Durch die Merkmale des Anspruches 6 ergibt sich der Vorteil einer einfacheren Bereitstellung eines Ersatzkontingents von Lager- bzw. Kommissionsbehältern.

Durch die Merkmale des Anspruches 7 kann die zur Verfügung stehende Fläche eines Lagers optimal genutzt werden und die Wege innerhalb des Lagers kurz gehalten werden.

Durch die Merkmale des Anspruches 8 können zwei Transportwagen für die Zu- und Abfuhr von Lager- und Kommissionierbehälter zu und von zwei Kommissionierbereichen eingesetzt werden, wobei diese zwei Kommissionierbereiche von einer einzigen Kommissioniereinrichtung bearbeitet werden.

Die Erfindung wird nun anhand der Zeichnung näher erläutert. Dabei zeigen:
- Fig. 1: schematisch den Ablauf des erfindungsgemäßen Verfahrens,
- Fig. 2: schematisch ein Lagers zur Durchführung des erfindungsgemäßen Verfahrens in Draufsicht,
- Fig. 3: schematisch ein Lager zur Durchführung des erfindungsgemäßen Verfahrens in Seitenansicht,
- Fig. 4: schematisch eine Beladestation,
- Fig. 5: eine axonometrische Darstellung eines Lagerbehälters,
- Fig. 6: eine axonometrische Darstellung eines Warenträgers.

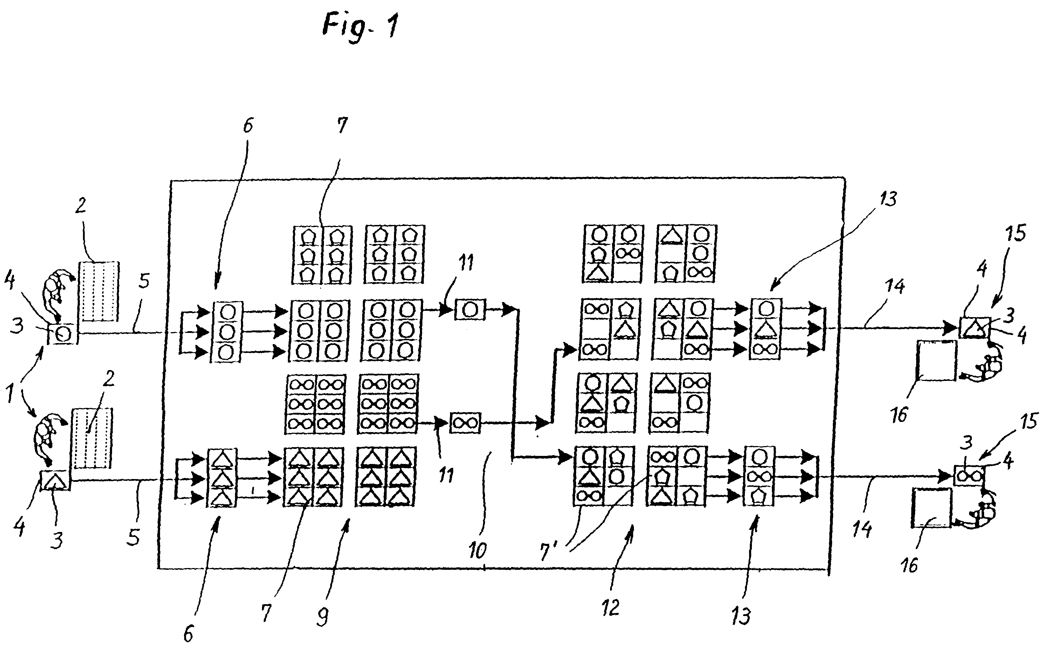

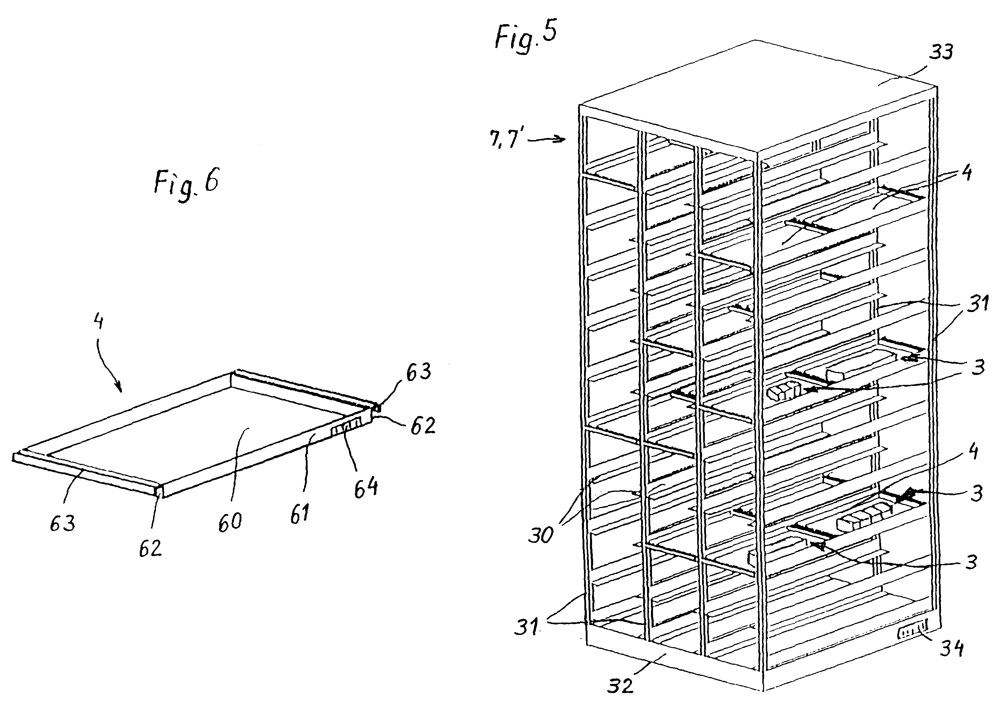

Bei dem Lager zur Durchführung des erfindungsgemäßen Verfahrens nach der Fig. 1 sind Übernahmestationen 1 vorgesehen, in denen die aus Verteileinheiten 3 bestehenden Großeinheiten 2 der verschiedenen ankommenden Waren in die Verteileinheiten zerlegt und die einzelnen Verteileinheiten 3 auf Warenträger 4 gelegt werden, wenn die Waren nicht samt den Warenträgern 4, bzw. mit diesen verbunden, angeliefert werden. Dabei kann es sich bei den Warenträgern 4 um Mehrweggebinde beliebiger Art handeln. Wesentlich dabei ist lediglich, daß deren Maße zur Aufnahme in Lager- und Kommissionsbehälter 7, 7' geeignet sind und z.B. alle diese Warenträger 4 zumindest ein gleiches Maß ihrer Bodenfläche aufweisen, das den Aufnahmen von Lager- und Kommissionsbehältern 7, 7' entspricht, die z.B. durch an den Seitenwänden der Behälter 7, 7' angeordnete, gegen das Innere derselben vorspringende Schienen 30 (Fig. 5) gebildet sein können.

Die Lager- bzw. Kommissionsbehälter 7, 7' sind, wie aus der Fig. 5 zu ersehen ist, im wesentlichen durch ein Gestell gebildet. Dieses Gestell weist an seiner Vorder- und an seiner Rückseite Steher 31 auf, die über eine Boden- und eine Deckplatte 33 miteinander verbunden sind. An den einander zugekehrten Seiten der Steher 31 sind in regelmäßigen vertikalen Abständen Schienen 30 befestigt, die einen L-förmigen Querschnitt aufweisen. Dabei verbinden diese Schienen 30 die entsprechenden Steher 30 der Vorderseite des Gestelles mit den Stehern 30 der Rückseite des Gestelles der Lager- bzw. Kommissionsbehälter 7, 7'.

Dabei können in den Lagerbehälter 7, oder in einen gleich ausgebildeten Kommissionsbehälter 7' beim dargestellten Ausführungsbeispiel zwei Warenträger 4 hintereinander in eine durch zwei einander zugekehrten Schienen 30 gebildete Aufnahme eingeschoben werden. Diese Lagerbehälter 7, bzw. Kommissionsbehälter 7' sind in vergrößertem Maßstab in der Fig. 6 dargestellt und sind an mindestens einer Längsseite mit einem Code 34 versehen.

Ein solcher Warenträger 4 weist einen rechteckigen Boden 60 auf, von dem umlaufende Wände 61 aufstehen. An den Schmalseiten 62 sind nach außen abstehende hakenförmige Ansätze 63 an den oberen Rändern der Wände 61 angeformt. Mit diesen hakenförmigen Ansätzen 63 können einander benachbarte Warenträger 4 miteinander verhakt werden. Dadurch kann der jeweils hintere Warenträger 4 bei Herausziehen des vorderen Warenträgers 4 aus einem Lagerbehälter 7 mit nach vorne gezogen werden.An mindestens einer Längsseite des Warenträgers 4 ist dieser mit einem Code 64 versehen.

Wie aus der Fig. 5 weiter zu ersehen ist, kann eine Verteileinheit 3 aus mehreren, z.B. drei, oder vier jeweils gleichen Artikel oder auch bloß aus einem einzigen Artikel gebildet sein.

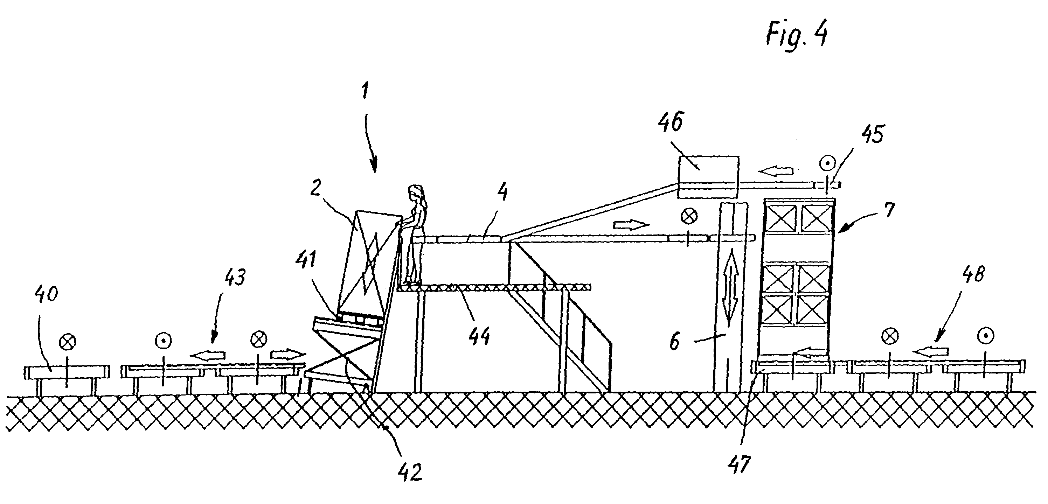

Wie aus der Fig. 4 zu ersehen ist, ist bei jeder Übernahmestation 1 eine Zuführeinrichtung 40, z.B. eine Rollenbahn, für auf Paletten 41 ruhenden Großeinheiten 2 von je einem Artikel vorgesehen. Zwischen dieser Zuführeinrichtung 40 und einem Hubgerät 42 ist eine Querfördereinrichtung 43 angeordnet, die in den Bereich zwischen Deck- und Bodenfläche einer jeden Palette 41 eingreifen und diese senkrecht zur Zuführeinrichtung 40 in Richtung zum Hubgerät 42 verschieben kann. Mit dieser Querfördereinrichtung 43 können auch die leeren Paletten 41 vom Hubgerät 42 zur Zuführeinrichtung 40 gebracht und von dieser abtransportiert werden.

Die Übernahmestation 1 weist weiters ein Podest 44 für eine Bedienungsperson auf, die die einzelnen Verteileinheiten 3 der Großeinheit 2 entnimmt und auf einen Warenträger 4 legt.

Die leeren Warenträger 4, die mit einem Code versehen sind, werden der Übernahmestation 1 über eine Warenträger-Zuführeinrichtung 45 und einen Entstapler 46 einzelweise zugeführt und mit je einer Verteileinheit 3 beladen. Anschließend werden die beladenen Warenträger 4 einer Beladestation 6 zugeführt, die die beladenen Warenträger 4 in einen Lagerbehälter 7 einschiebt.

Im Bereich der Übernahmestation 1 wird der Code des jeweils beladenen Warenträgers von einer nicht dargestellten Leseeinrichtung erfaßt und an einen nicht dargestellten Rechner weitergeleitet.

Zum Beginn einer Entnahme der Verteileinheiten 3 aus einer Großeinheit 2 wird ein die Artikel der Großeinheit kennzeichnender Code in den Rechner eingegeben. Dabei kann auch im Bereich der Querfördereinrichtung 43 eine mit dem Rechner verbundene Leseeinrichtung vorgesehen sein, die einen an der Großeinheit 2 angebrachten Code liest und an den Rechner weiterleitet. Dadurch stellt der Rechner eine Verknüpfung der Daten der Artikel, bzw. Verteileinheiten 3 und der diese jeweils aufnehmenden Warenträger 4 her.

Die Beladestation 6 ist ebenfalls mit dem Rechner verbunden, in deren Bereich eine Aufnahme 47 für einen Lagerbehälter 7 angeordnet ist, der ebenfalls mit einem Code versehen ist. Die Aufnahme 47 ist ebenfalls mit einer nicht dargestellten Leseeinrichtung versehen, die mit dem Rechner verbunden ist.

Dadurch erfaßt der Rechner auch den Lagerort eines jeden beladenen Warenträgers 4 in einem bestimmten Lagerbehälter 7.

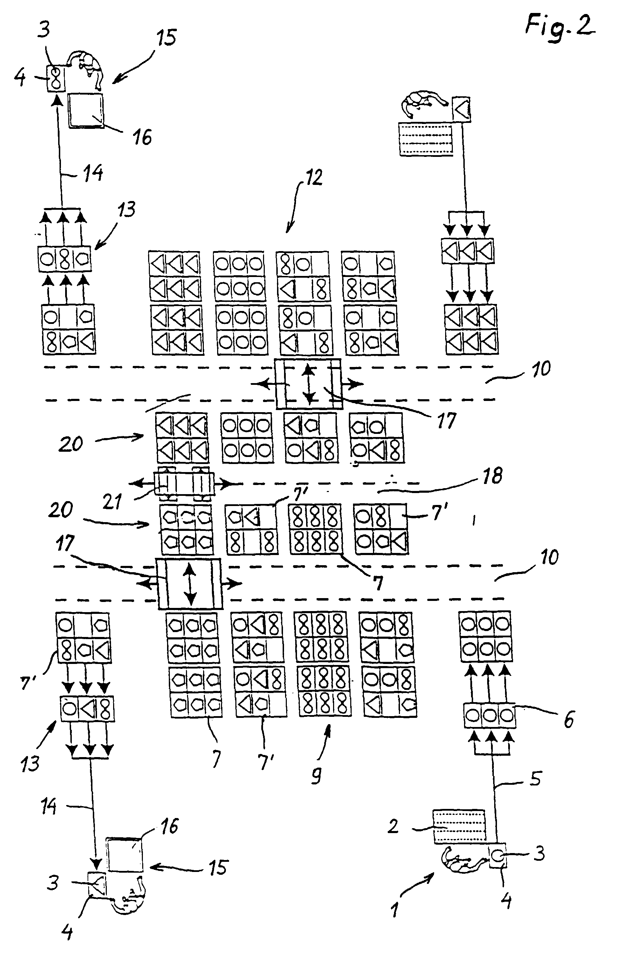

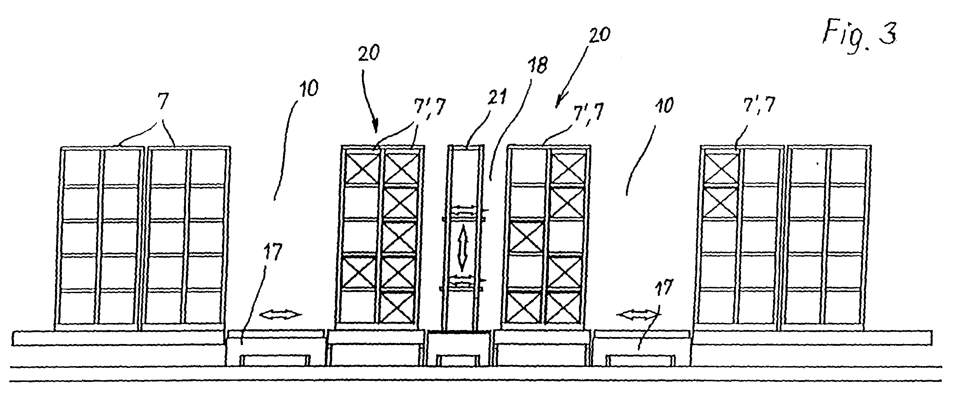

Die befüllten Lagerbehälter 7 werden über eine Querfördereinrichtung 48 einer Fördereinrichtung zugeleitet. Diese Fördereinrichtung, kann, wie aus der Fig. 2 und 3 zu ersehen ist, durch einen Transportwagen 17 gebildet sein, der in einer Fahrstraße 10 verfahrbar ist. Dabei kann die Querfördereinrichtung 48 an dem Transportwagen 17 angeordnet sein. Dieser Transportwagen 17 steht mit dem Rechner in Verbindung und weist eine den jeweils zurückgelegten Weg des Transportwagens 7 erfassenden nicht dargestellten Fühler und eine ebenfalls nicht dargestellte Leseeinrichtung zur Erfassung des Codes des jeweiligen Lagerbehälters 7 auf. Damit kann der Rechner den jeweiligen Ort eines jeden Lagerbehälters 7 erfassen. Dies ermöglicht auch eine Erfassung des jeweiligen Ortes eines mit je einer Verteileinheit 3 beladenen Warenträgers 4. Damit ist aber auch der jeweilige Ort einer jeden Verteileinheit 3 dem Rechner bekannt.

Vorzugsweise werden die Lagerbehälter 7 nur mit gleichen Artikel beladen, doch ist es auch möglich Lagerbehälter 7 mit verschiedenen Artikeln zu beladen, insbesondere wenn es sich dabei um Waren handelt, bei denen nur relativ geringe Mengen umgeschlagen werden.

Die beladenen Lagerbehälter 7 werden mittels Transporteinrichtungen in einen Zwischenlagerbereich 9 gebracht und dort aufgestellt. Dabei können die einzelnen Lagerbehälter nach verschiedenen Kriterien aufgestellt werden, z.B. nach der Häufigkeit ihres Umschlages. (Fig. 1, Fig. 2)

Die Lagerbehälter 7 weisen, wie bereits erwähnt, mehrere übereinander angeordnete Aufnahmen zum Einschieben der Warenträger 4 auf, wobei die Abstände vorzugsweise gleich sind. Je nach der Höhe der auf den einzelnen Warenträgern 4 befindlichen Verteileinheiten 3, die der Rechner aufgrund der eingegebenen warenspezifischen Kennung erkennt, werden dann die Warenträger 4 in entsprechenden vertikalen Abständen in die Lagerbehälter 7 mittels der vom Rechner gesteuerten Beladeeinrichtung 6 eingeschoben.

Die Lagerbehälter 7 weisen eine Tiefe auf, die einem ganzzahligen Vielfachen größer eins der Länge oder Breite eines Warenträgers 4 entspricht, sodaß mehrere Warenträger 4 in einer Ebene der Lagerbehälter 7 hintereinander eingeschoben werden können. Dabei sind die Warenträger 4 an ihren entsprechenden Seiten 62 mit ineinander in Eingriff bringbaren Kupplungseinrichtungen versehen. Diese sind durch die hakenförmigen Ansätze 63 gebildet und ermöglichen es, die hinteren Warenträger 4 beim Herausziehen des vordersten Warenträgers 4 nach vor zu ziehen, oder aber es können Kommissioniereinrichtungen 11, 21 mit Entnahmeeinrichtungen versehen sein, die entsprechend weit in die Lagerbehälter eingreifen können, um auch den hintersten Warenträger 4 einer durch die L-förmigen Schienen 30 gebildeten Aufnahme des Lagerbehälters 7 entnehmen zu können.

Vom Zwischenlagerbereich 9 durch eine Fahrstraße 10 getrennt ist ein Aufstellbereich 12 für Kommissionsbehälter 7' vorgesehen, die baugleich mit den Lagerbehältern 7 ausgebildet sind. Diese werden mit mindestens einer nicht näher dargestellten verfahrbaren Kommissioniereinrichtung 11 mit den einer Kommission zugeordneten Waren beladen, wobei die Warenträger 4 mit den entsprechenden Verteileinheiten 3 aus den im Zwischenlagerbereich 9 stehenden Lagerbehältern 7 entnommen und in die Kommissionsbehälter 7' eingeschoben werden, die ebenfalls mit einer Kennung versehen sind. Diese Kennungen werden dem Rechner über vorzugsweise an den vom Rechner gesteuerten Kommissioniereinrichtungen 11 angeordneten Leseeinrichtungen übermittelt. Damit ist eine vollautomatische Kommissionierung möglich.

Die beladenen Kommissionsbehälter 7' können entweder im Aufstellbereich 12 zwischengelagert werden, oder aber sofort einer Entnahmestation 13 zugeführt werden. In dieser werden die Warenträger 4 samt den darauf befindlichen Verteileinheiten 3 aus einem Kommissionsbehälter 7' entnommen. Bei der Entnahme der Warenträger 4 mit den entsprechenden Verteileinheiten wird eine vom Rechner aufgrund der Festigkeit der kommissionierten Verteileinheiten festgelegte Packordnung beachtet. Dabei werden robuste Artikel, wie z.B. Gläser mit eingelegten Früchten, Waschpulverpackungen u.ä. zuerst entnommen und die empfindlichsten Artikel, wie z.B. Packungen von Eiern, zuletzt entnommen.

Die Warenträger 4 werden über eine Fördereinrichtung 14 in der Reihenfolge ihrer Entnahme aus den Kommissionsbehältern 7' einer Packstation 15 zugeführt. Dort werden die Verteileinheiten 3 von den Warenträgern 4 genommen und in Transportbehälter 16 gepackt. In dem Fall, daß Warenträger 4 mit den Waren verbunden angeliefert werden, können diese mit den Verteileinheiten verbunden in einen Transportbehälter 16 gepackt werden.

Die entleerten Kommissionsbehälter 7' werden dabei gleichzeitig mittels einer verfahrbaren Transporteinrichtung (nicht dargestellt) in eine nicht dargestellte Bereitstellungszone gebracht, aus der die Behälter 7, 7' zu einem späteren Zeitpunkt wieder entnommen und als Lagerbehälter 7 zu einer Beladestation 6 oder in den Aufstellbereich 12 für Kommissionsbehälter 7' gebracht werden.

Die Fig. 2 zeigt eine mögliche Ausführungsform eines Lagers zur Durchführung des erfindungsgemäßen Verfahrens. Dabei ist eine den Zwischenspeicherbereich 9 von einem Kommissionierbereich 20 trennende Fahrstraße 10 vorgesehen. In dieser Fahrstraße 10 ist ein Transportwagen 17 verfahrbar, der eine quer zu seiner Fahrtrichtung ausschiebbare Plattform zur Aufnahme der Lagerbehälter 7 aufweist und vom nicht dargestellten Rechner gesteuert ist. Dabei ist der Transportwagen 17 mit einer mit dem Rechner verbundene Leseeinrichtung zur Erfassung des Codes des betreffenden Lager- oder Kommissionsbehälters 7, 7' versehen.

Mit diesem Transportwagen 17 werden die Lagerbehälter 7 von der Beladestation 6 abtransportiert und im Zwischenlagerbereich 9 abgestellt. Im Bedarfsfalle werden die Lagerbehälter 7 aus dem Zwischenlagerbereich 9 in den Kommissionierbereich 20 überstellt.

Bei der dargestellten Ausführungsform mit zwei einander gegenüberliegenden Übernahmestationen 1 sind zwei Kommissionierbereiche 20 vorgesehen, die durch eine Fahrstraße 18 voneinander getrennt sind, in der eine Kommissioniereinrichtung 21 verfahrbar ist. Diese ist mit dem Rechner verbunden und von diesem gesteuert. Die Kommissioniereinrichtung 21 entnimmt den Lagerbehältern 7 die für eine bestimmte Kommission vorgesehenen Verteileinheiten 3 samt den diese tragenden Warenträgern 4 und schiebt diese in Kommissionsbehälter 7' ein.

Die befüllten Kommissionsbehälter 7' können aus dem Kommissionierbereich 20 im Bedarfsfalle mittels des Transportwagens 17 zur Entnahmestation 13 überstellt und dort entladen werden. Falls eine größere Anzahl von Kommissionen vorbereitet wird, aber diese Kommissionen nicht sofort ausgeliefert werden, wie dies z.B. während der Nachtstunden der Fall sein kann, können die befüllten Kommissionsbehälter 7', aus dem Kommissionierbereich 20 in einen gesonderten Aufstellbereich für Kommissionsbehälter 7' mit den Transportwagen 17 überstellt werden. Die befüllten Kommissionsbehälter 7' können aber auch, wie dies in der Fig. 2 dargestellt ist, in den Zwischenlagerbereich 9 überstellt werden. Dadurch ergeben sich in ihrer Größe variable gemischt angeordnete Aufstellbereiche für Lagerbehälter 7 und Kommissionsbehälter 7'. Bei Beginn der Auslieferung, können die vorbereiteten Kommissionsbehälter 7' in einer gewünschten Reihenfolge den Entnahmestationen 13 zugeführt werden.

Bei dieser Ausführungsform ist es zweckmäßig, wenn eine Fahrstraße 18 für eine Kommissioniereinrichtung 21 zwischen zwei Fahrstraßen 10 für die Transportwagen 17 vorgesehen sind. Dabei ergeben sich zu beiden Seiten der Fahrstraße 18 für die Kommissioniereinrichtung 21 Kommissionierbereiche 20 (Fig. 2, Fig. 3).

Dabei sind die Kommissioniereinrichtung 21 und die Transportwagen 17 vom Rechner gesteuert. Die Transportwagen 17 sind, wie bereits erwähnt, mit Lesegeräten zur Erfassung der Codes der Behälter 7, 7' versehen und die Kommissioniereinrichtung 21 ist mit Lesegeräten zur Erfassung der Codes der Warenträger 4 versehen.

Die Fig. 1 zeigt schematisch eine Entnahmestation 13, die mit dem Rechner (nicht dargestellt) verbunden und von diesen gesteuert ist. Dabei erfolgt die Entnahme der Warenträger 4 aus einem Kommissionsbehälter 7' entsprechend einer Packordnung für die einzelnen Verteileinheiten 3. Diese Packordnung ist, wie bereits erläutert nach der Belastbarkeit der verschiedenen Verteileinheiten 3 festgelegt, sodaß zuerst die am stärksten durch Druck belastbaren Verteileinheiten 3 und zuletzt die empfindlichsten Verteileinheiten aus dem Kommissionsbehälter 7' entnommen werden.

Die Warenträger 4 sind als relativ hohe Schachteln ausgebildet. Diese Schachteln weisen eine Länge auf, die größer als die halbe Tiefe der Kommissionsbehälter ist, sodaß diese lediglich einen Warenträger in einer durch zwei einander zugekehrte Schienen 30 gebildete Aufnahme aufnehmen kann. Damit soll gezeigt werden, daß die Form der Warenträger 4 vom Konstrukteur weitgehend frei gewählt werden kann. Es muß lediglich dafür gesorgt sein, daß die Warenträger in die Lager- oder Kommissionsbehälter 7, 7' eingeschoben werden können.

Die Warenträger sind zweckmäßigerweise aus einem nicht brennbaren Material, wie z.B. Metall hergestellt.

Die Entnahmestation 13 weist ein parallel zur Vorderseite, bzw. senkrecht zur Längserstreckung der Schienen 30 der Kommissionsbehälter 7' verfahrbares Gestell auf. Dieses Gestell weist einen vertikalen Steher auf, an dem ein Support vertikal verschiebbar gehalten ist.

Dieser Support weist eine die Warenträger 4 im Kommissionsbehälter 7' erfassende und die Warenträger 4 in Richtung zu einem Förderband transportierende Einrichtung auf, die in beliebiger Weise ausgebildet sein kann. Beispielsweise kann eine solche Einrichtung durch ein auf einem in horizontaler Richtung ausfahrbaren und in die Kommissionsbehälter 7' einfahrbarer Teleskopausleger gebildet sein, auf dem ein separat steuerbares Förderband angeordnet ist.

Bei entsprechender Ausgestaltung der Warenträger 4 kann die Einrichtung auch gemäß der DE 195 01 883 A ausgebildet sein.

Bei der Entnahme wird von dem Support zuerst die Position der am belastbarsten Verteileinheit angefahren und samt dem entsprechenden Warenträger 4 aus dem Kommissionisbehälter 7' entnommen. Danach wird durch Verschieben des Gestelles und des Supports das Förderband angesteuert und der Warenträger 4 auf das Förderband übergeben, das den Warenträger 4 zu einer Packstation 15 befördert. Danach wird die Position des Warenträgers 4 mit der in der Packordnung folgenden Verteileinheit angesteuert und der oben beschrieben Vorgang wiederholt sich, bis der Kommissionsbehälter 7'vollkommen entleert ist.

Der Kommissionsbehälter 7'steht dabei auf einem genau definierten Platz, zu dem er von einem Transportwagen 17 gebracht worden ist.

## Patentansprüche

1. Verfahren zum Kommissionieren von artikelrein zusammengestellten, mindestens eine, vorzugsweise jedoch mehrere Einheiten umfassenden Verteileinheiten (3), die zu mehreren solche Verteileinheiten (3) umfassenden Großeinheiten (2) zusammengestellt sind, bei dem aus den ankommenden Großeinheiten (2) die Verteileinheiten (3) entnommen und zwischengelagert werden, wonach aus diesen zwischengelagerten Verteileinheiten (3) die einzelnen Kommissionen zusammengestellt und in Transportbehälter eingegeben werden, **dadurch gekennzeichnet**, daß die Verteileinheiten (3) einzeln auf je einen mit einem Code (64) versehenen Warenträger (4) gelegt werden und die Daten der auf dem betreffenden Warenträger (4) befindlichen Verteileinheit (3) einem Rechner zugeleitet und dem diese Verteileinheit (3) aufnehmenden Warenträger (4) zugeordnet werden und danach die Warenträger (4) in Lagerbehälter (7) eingeschoben und mit den Lagerbehältern (7) transportiert und zwischengelagert werden, wonach die für je eine Kommission bestimmten Verteileinheiten (3) verschiedener Waren samt den diese tragenden Warenträger (4) rechnergestützt aus den Lagerbehältern (7) entnommen und in Kommissionsbehälter (7') eingeschoben und mit diesen zu einer Entnahmestation (13) gebracht werden, wo sie ebenfalls rechnergestützt entsprechend einer vorgegebenen Packordnung den Kommissionsbehältern (7') entnommen werden.

2. Verfahren nach Anspruch 2, **dadurch gekennzeichnet**, daß die einer bestimmten Kommission zugeordneten beladenen Warenträger (4) in der Reihenfolge ihrer Entnahme aus den Kommissionsbehältern (7') in der Entnahmestation (13) einer Packstation (15) zugeleitet werden, in der die Verteileinheiten (3) in der Reihenfolge ihres Einlangens in Transportbehälter (16') gepackt werden.

3. Verfahren nach Anspruch 1, **dadurch gekennzeichnet**, daß die Kommissionsbehälter (7') im beladenen Zustand zwischengelagert werden.

4. Einrichtung zur Durchführung des Verfahrens nach einem der Ansprüche 1 bis 3, bei der mindestens eine Übernahmestation (1) zur Aufteilung von ankommenden Großeinheiten (2) in Verteileinheiten (3), Lagereinrichtungen zur Aufnahme der Verteileinheiten (3), mindestens eine Kommissioniereinrichtung (21, 22) und einer Packstation (15) zum Beladen von Transportbehältern (16) mit einer Kommission zugeordneten Verteileinheiten, **dadurch gekennzeichnet**, daß die Übernahmestation (1) eine mit einem Rechner verbundene Eingabeeinrichtung und eine Zuführung für mit einem Code versehene Warenträger (4) zur Eingabe einer warenspezifischen Kennung aufweist, wobei eine mit dem Rechner verbundene Leseeinrichtung zur Erfassung der Codes der einzelnen Warenträger (4) vorgesehen ist, und die Lagereinrichtungen transportable mit Halterungen zur Aufnahme von Warenträgern (4) versehene Lagerbehälter (7) und Kommissionierbehälter (7') aufweist, wobei mindestens ein verfahrbarer Transportwagen (17) zum Transport der Lagerbehälter (7) vorgesehen ist und die Kommissioniereinrichtung (21, 22) verfahrbar und zum Entnehmen von Warenträger (4) aus den Lagerbehältern (7) und zum Einschieben der Warenträger (4) in die Kommissionsbehälter (7') vorgesehen und mit mindestens einem Aufnehmer für einen Warenträger (4) versehen ist, wobei der bzw. die weggebundenen Transportwagen (17) und Kommissioniereinrichtung(en) (11, 21) mit dem Rechner in Verbindung stehen, mit dem auch eine Entnahmestation (13), zum Entnehmen von einer bestimmten Kommission zugeordneten beladenen Warenträger (4) aus einem Lagerbehälter (7') in Verbindung steht.

5. Einrichtung nach Anspruch 4, **dadurch gekennzeichnet**, daß die Kommissioniereinrichtung (11, 21) mit mindestens einer in die zur Aufnahme der Warenträger (4) vorgesehenen Aufnahmen der Behälter (7, 7') einfahrbaren Entnahmeeinrichtung versehen ist.

6. Einrichtung nach Anspruch 4, **dadurch gekennzeichnet**, daß die Lagerbehälter (7) und die Kommissionsbehälter (7') gleich ausgebildet sind.

7. Einrichtung nach Anspruch 4 oder 5, **dadurch gekennzeichnet**, daß in ihrer Größe variable Aufstellbereiche für die Zwischenlagerung von Lagerbehälter (7) und Kommissionsbehälter (7') gemischt angeordnet sind.

8. Einrichtung nach einem der Ansprüche 4 bis 6, **dadurch gekennzeichnet**, daß zwischen einem Zwischenlagerbereich (9) für die Lagerbehälter (7) und einem Kommissionierbereich (20) eine Fahrstraße (10) für die Transportwagen (17) vorgesehen ist, und der Kommissionierbereich (20) eine parallel zu dieser verlaufende Fahrstraße (18) für die verfahrbare Kommissioniereinrichtung (21) aufweist, wobei vorzugsweise an beiden Seiten der Fahrstraße (18) für die Kommissioniereinrichtung (21) ein Kommissionierbereich (20) vorgesehen ist.

## Claims

1. A method for the order picking of store keeping units (3) comprising at least one, preferably several units compiled in an article-pure way, which store keeping units are compiled into large units (2) comprising several such store keeping units (3), in which the store keeping units (3) are taken from the arriving large units (2) and are intermediately stored, whereupon from said intermediately stored store keeping units (3) the individual orders are composed and are entered into transport containers, characterized in that the store keeping units (3) are each placed one-by-one on one ware carrier (4) each provided with a code (64) and the data of the store keeping unit (3) disposed on the respective ware carrier (4) are supplied to a computer and are allocated to the ware carrier (4) receiving said store keeping unit (3) and whereafter the ware carriers (4) are inserted into storage containers (7) and are transported with the storage containers (7) and are intermediately stored, whereupon the store keeping units (3) of different wares which are each determined for a specific order, plus the ware carriers (4) carrying the same, are withdrawn from the storage containers (7) with the help of a computer and inserted into consignment containers (7') and brought with the same to the withdrawal station (13) where they are taken, again with the help of a computer, from the consignment containers (7') according to a predetermined packing order.

2. A method as claimed in claim 2, characterized in that the loaded ware carriers (4) which are allocated to a specific consignment are supplied in the sequence of their withdrawal from the consignment containers (7') in the withdrawal station (13) of a packing station (15) in which the store keeping units (3) are packed into transport containers (16') in the sequence of their arrival.

3. A method as claimed in claim 1, characterized in that the consignment containers (7') are intermediately stored in the loaded condition.

4. A device for carrying out the method as claimed in one of the claims 1 to 3, wherein there are provided at least one receiving station (1) for breaking down the arriving large units (2) into store keeping units (3), storage devices for receiving the store keeping units (3), at least one order picking device (21, 22) and a packing station (15) for loading transport containers (16) with store keeping units allocated to a consignment , characterized in that the receiving station (1) is provided with an input device connected with a computer and a delivery device for ware carriers (4) provided with a code for entering a ware-specific identifier, with a reader device which is connected to the computer being provided for detecting the codes of the individual ware carriers (4), and the storage devices are provided with transportable storage containers (7) having holding devices for receiving ware carriers (4) and with consignment containers (7'), with at least one movable transport carriage (17) for the conveyance of the storage containers (7) being provided and the order picking device (21, 22) being movable and provided for removing ware carriers (4) from the storage containers (7) and for inserting ware carriers (4) into the consignment containers (7') and with at least one receptacle for the ware carrier (4), with the path-bound transport carriage(s) (17) and the order picking device(s) (11, 21) being in connection with the computer with which also a withdrawal station (13) is in connection for the purpose of withdrawing ware carriers (4), which are allocated to a specific order, from a storage container (7).

5. A device as claimed in claim 4, characterized in that the order picking device (21, 22) is provided with at least one withdrawal device which is insertable into the receptacles of the containers (7, 7') provided for receiving the ware carriers (4).

6. A device as claimed in claim 4, characterized in that the storage containers (7) and the consignment containers (7') are arranged similarly.

7. A device as claimed in claim 4 or 5, characterized in that placement zones which are variable in their size are arranged in a mixed way for the intermediate storage of storage containers (7) and consignment containers (7').

8. A device as claimed in one of the claims 4 to 6, characterized in that between an intermediate storage area (9) for the storage containers (7) and an order picking area (20) there is provided a route (10) for the transport carriages (17), and the order picking area (20) is provided with a route (18) extending parallel thereto for the movable order picking device (21), with an order picking area (20) being preferably arranged on either side of the route (18) for the order picking device (21).

## Revendications

1. Procédé de préparation des commandes avec des unités de livraison formées par des marchandises fondamentales et contenant au moins une unité, de préférence plusieurs unités, qui sont regroupées pour former des unités globales (2) contenant plusieurs unités de livraison (3) de ce type, dans lequel procédé les unités de livraison (3) sont prélevées dans les unités globales (2) acheminées et sont stockées temporairement, après quoi, les différentes commandes préparées sont assemblées à partir de ces unités de livraison (3) stockées temporairement et sont introduites dans des bacs de transport, caractérisé en ce que les unités de livraison (3) sont déposées séparément chacune sur un support de marchandises (4) muni d'un code (64) et les données de l'unité de livraison (3) posée sur le support de marchandises (4) concerné sont transférées vers un ordinateur et associées au support de marchandises (4) qui porte cette unité de livraison (3), ensuite les supports de marchandises (4) sont insérés dans des caisses de stockage (7) et sont transportés et stockés temporairement avec les caisses de stockage (7), après quoi les unités de livraison (3) de diverses marchandises, définies pour une commande, sont prélevées avec les supports de marchandises (4) sur lesquels elles sont posées, dans les caisses de stockage (7) par un processus commandé par ordinateur et sont introduites dans des caisses de commandes préparées (7') et sont acheminées avec celles-ci vers une station de prélèvement (13) où elles sont prélevées, également par un processus commandé par ordinateur, dans les caisses de commandes préparées (7') selon un ordre d'emballage prédéfini.

2. Procédé selon la revendication 1, caractérisé en ce que les supports de marchandises (4) chargés, associés à une commande déterminée, sont acheminés dans l'ordre de leur prélèvement dans les caisses de commandes préparées (7') dans la station de prélèvement (13) vers une station d'emballage (15), dans laquelle les unités de livraison (3) sont emballées selon l'ordre dans lequel elles ont été introduites dans les bacs de transport (16').

3. Procédé selon la revendication 1, caractérisé en ce que les caisses de commandes préparées (7') sont stockées temporairement à l'état chargé.

4. Dispositif destiné à la mise en oeuvre du procédé selon l'une quelconque des revendications 1 à 3, dans lequel dispositif il est prévu au moins une station de transfert (1) destinée à décomposer les unités globales (2) acheminées en unités de livraison (3), des dispositifs de stockage destinés à recevoir les unités de livraison (3), au moins un dispositif de préparation des commandes (21, 22) et une station d'emballage (15), afin de charger des unités de livraison associées à une commande déterminée dans des bacs de transport (16), caractérisé en ce que la station de transfert (1) est équipée d'un dispositif de saisie de données reliée à un ordinateur et d'un dispositif d'acheminement réservé à un support de marchandises (4) muni d'un code, afin de pouvoir enregistrer une identification propre aux marchandises, un dispositif de lecture relié à l'ordinateur étant prévu pour l'enregistrement du code de chaque support de marchandises (4), et les dispositifs de stockage sont munis de caisses de stockage (7) et de caisses de commandes préparées (7') transportables et munies de moyens de réception destinés à recevoir des supports de marchandises (4), au moins un chariot de transport (17) mobile étant prévu pour le transport des caisses de stockage (7), et le dispositif de préparation des commandes (21, 22) étant mobile et prévu pour le prélèvement des supports de marchandises (4) dans les caisses de stockage et pour insérer les supports de marchandises (4) dans les caisses de commandes préparées (7'), et comprend au moins un dispositif de réception pour un support de marchandises (4), le ou les chariots de transport (17) couvrant le même trajet, et le ou les dispositifs de préparation des commandes (11, 21) étant reliés à l'ordinateur, lequel est également en liaison avec une station de prélèvement (13) destinée à prélever dans une caisse de stockage (7) des supports de marchandises (4) chargés, associés à une commande déterminée.

5. Dispositif selon la revendication 4, caractérisé en ce que le dispositif de préparation des commandes (11, 21) est équipé d'au moins un dispositif de prélèvement qui peut être introduit dans les dispositifs de réception des caisses (7, 7'), destinés à recevoir les supports de marchandises (4).

6. Dispositif selon la revendication 4, caractérisé en ce que les caisses de stockage (7) et les caisses de commandes préparées (7') sont conçues de manière identique.

7. Dispositif selon la revendication 4 ou 5, caractérisé en ce que des zones de dépose de taille variable, destinées au stockage temporaire des caisses de stockage (7) et des caisses de commandes préparées (7'), sont disposés dans un ordre mixte.

8. Dispositif selon l'une quelconque des revendications 4 à 6, caractérisé en ce qu'il est prévu, entre une zone de stockage temporaire (9) pour les caisses de stockage (7) et une zone de préparation des commandes (20), une voie de circulation (10) réservée aux chariots de transport (17), et la zone de préparation des commandes (20) comporte une voie de circulation (18) parallèle à celle-ci sur laquelle se déplace le dispositif de préparation des commandes (21), une zone de préparation des commandes (20) étant prévue de préférence de part et d'autre de la voie de circulation (18) réservée au dispositif de préparation des commandes (21).
